(19) Europäisches Patentamt
European Patent Office
Office européen des brevets

(11) EP 0 636 649 B1

(12) **EUROPÄISCHE PATENTSCHRIFT**

(45) Veröffentlichungstag und Bekanntmachung des Hinweises auf die Patenterteilung:
**03.12.1997 Patentblatt 1997/49**

(51) Int Cl.[6]: **C08L 1/12**, C08J 3/18, C08L 67/04, D01F 2/30

(21) Anmeldenummer: **94111657.6**

(22) Anmeldetag: **26.07.1994**

(54) **Plastifiziertes Celluloseacetat, Verfahren zu dessen Herstellung und seine Verwendung zur Herstellung von Filamenten**

Plasticised cellulose acetate, process for obtaining the same and its use in the production of filaments

Acétate de cellulose plastifié, procédé pour l'obtenir, et son application à la fabrication de filaments

(84) Benannte Vertragsstaaten:
**AT BE DE ES FR GB IT NL**

(30) Priorität: **28.07.1993 DE 4325352**

(43) Veröffentlichungstag der Anmeldung:
**01.02.1995 Patentblatt 1995/05**

(73) Patentinhaber: **RHONE-POULENC RHODIA AKTIENGESELLSCHAFT**
**79108 Freiburg (DE)**

(72) Erfinder:
- **Mülhaupt, Rolf, Prof. Dr.**
  **D-79117 Freiburg (DE)**
- **Warth, Holger**
  **D-79098 Freiburg (DE)**
- **Schätzle, Joachim, Dr.**
  **D-79341 Kenzingen (DE)**

(74) Vertreter:
**Hagemann, Heinrich, Dr.rer.nat., Dipl.-Chem. et al**
**Patentanwälte**
**Hagemann & Kehl**
**Postfach 86 03 29**
**81630 München (DE)**

(56) Entgegenhaltungen:
**WO-A-92/20738** **GB-A- 2 152 944**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 636 649 B1

Printed by Jouve, 75001 PARIS (FR)

## Beschreibung

Die Erfindung betrifft ein plastifiziertes Celluloseacetat, mit einem Gehalt an einem modifizierten Celluloseacetat A, das ein aufgepfropftes Oligomer eines cyclischen Esters, insbesondere in Form von ε-Caprolacton, aufweist, ein Verfahren zu dessen Herstellung und seine Verwendung zur Herstellung von Filamenten.

Die US-A-3 922 239 beschreibt ein Gemisch aus Celluloseestern oder -ethern, die mit polymeren cyclischen Estern gemischt werden, wie beispielsweise dem Oligomer von ε-Caprolacton. Diese Masse soll thermoplastisch sein. Es hat sich gezeigt, daß die Mischungsbestandteile keine zufriedenstellende Kompatibilität haben. Dies äußert sich darin, daß bei der thermoplastischen Verarbeitung keine homogene Schmelze entsteht. Bei der Verarbeitung ist in einem gewissen Ausmaße sogar eine Entmischung festzustellen.

Die GB-A-2 152 944 beschreibt plastifizierte Celluloseacetate. Diese werden durch Umsetzung eines freie Hydroxylgruppen aufweisenden Celluloseacetats mit einem cyclischen Ester, insbesondere in Form von ε-Caprolacton, in Gegenwart eines Katalysators erhalten. Das Gewichtsverhältnis von Celluloseacetat zu cyclischem Ester soll zwischen 1/99 und 95/5 und die Polymerisationstemperatur zwischen 120 und 230°C liegen. Vorzugsweise wird die Reaktion in trockenem Stickstoff als Schutzgas durchgeführt. Die Reaktionsmischung kann ein organisches Lösungsmittel, das keinen aktiven Wasserstoff im Molekül enthält und mit dem Celluloseacetat und dem cyclischen Estern ausreichende Kompatibilität zeigt, enthalten, wie beispielsweise Xylol. Als Katalysator kommen insbesondere organische Säuren, anorganische Säuren, Alkalimetalle, wie Natrium und Kalium, tertiäre Amine, Alkylaluminium und dessen Derivate, wie Triethylaluminium, Alkoxytitan-Verbindungen, wie Tetrabutyltitanat, organometallische Verbindungen, wie Zinnoctoat und Dibutylzinndilaurat, und Metallhalogenide, wie Zinnchlorid, in Frage. Die Menge des cyclischen Esters, der mit dem hydroxylgruppenhaltigen Celluloseacetat umgesetzt wird, soll vorzugsweise zwischen 0,5 und 4,0 Mol-Einheiten pro Anhydroglucose-Einheit des Celluloseacetats liegen. Die Schmelztemperatur des plastifizierten Celluloseacetats wird durch eine "innere" Plastifizierung herabgesetzt. Gleichzeitig wird die Zersetzungstemperatur angehoben. Hierdurch läßt sich das plastifizierte Celluloseacetat in vorteilhafter Weise in der Schmelze zu Filamenten verspinnen. Diese werden u.a. im Textilbereich und zur Herstellung von Zigarettenfiltertows verwendet.

Das Verfahren und die plastifizierten Celluloseacetate, die in der GB-A-2 152 944 beschrieben werden, sind verbesserungsbedürftig. Die Verwendung von Caprolactongepfropftem Celluloseacetat, entsprechend der Komponente A ohne Komponente B (nachfolgend noch geschildert), erfordert einen hohen Gehalt an Caprolacton, um die Verarbeitung aus der Schmelze zu gewährleisten. Dies ist verhältnismäßig teuer. Darüber hinaus wäre es erstrebenswert, den Schmelzpunkt des plastifizierten Celluloseacetats noch weiter zu senken, um die Vorteile des Verspinnens aus der Schmelze gegenüber dem Trockenspinnen stärker zu nutzen. Dem Trockenspinnverfahren haftet der Nachteil an, daß die eingesetzten Lösungsmittel rückgewonnen werden müssen, was ökonomisch und ökologisch nachteilig ist.

Der Stand der Technik nach den folgenden Literaturstellen geht über denjenigen der oben erörterten GB-A-2 152 944 nicht hinaus: Die WO 92/20738 beschreibt abbaubare Celluloseester, die einen hydrophilen Abbau-Aktivator enthalten. Dieser diffundiert unter hoher Umgebungsfeuchtigkeit in den Celluloseester und macht diesen abbaubar. Der Abbau-Aktivator kann u.a. ein Lacton sein. Er ist auch als Weichmacher für den Celluloseester anzusehen. Übliche Weichmacher können zusätzlich eingesetzt werden. Die US-A-4 529 788 befaßt sich mit einem Verfahren zur Herstellung von Pfropfpolymerisaten, wobei ein cyclischer Ester in Gegenwart eines Cellulose-Derivats einer katalysierten Ringöffnungspolymerisation unterzogen wird. Das Pfropfpolymerisat hat hohe Transparenz, gute Filmbildungseigenschaften und hohe Löslichkeit. Derwent-Abstract 86-242456/37 der J 61171719 bezieht sich auf Polyurethane verbesserter Mischbarkeit mit anderen Polymerisaten, wobei organische Diisocyanate mit Polyesterpolyolen umgesetzt werden, die durch ringöffende Polymerisation von Lactonen in Gegenwart von Sorbitol erhalten werden. Die Polymerisate zeigen u.a. verbesserte Beständigkeit gegenüber Hitze und Lösungsmittel und Mischbarkeit mit anderen Polymerisaten. Derwent-Abstract 86/016500 der J 60238317 beschreibt Alkyd-Harze zum Beschichten von Holz, Metall, plastischen Materialien und dergl., wobei diese ein Pfropfpolymerisat enthalten, das durch Ringöffnung cyclischer Ester in Gegenwart von Hydroxycellulose-Derivaten erhältlich ist. Die Alkyd-Harze zeigen u.a. verbesserte Härte und Wetterbeständigkeit und sind z.B. Bestandteil von Farben für Metall und Holz.

Der Erfindung lag die Aufgabe zugrunde, das eingangs bezeichnete plastifizierte Celluloseacetat so zu modifizieren, daß dessen Schmelzpunkt weiter gesenkt wird, und besonders geeignete Verfahren zur Herstellung derartiger plastifizierter Celluloseacetate vorzuschlagen, deren Wirtschaftlichkeit verbessert ist.

Obige Aufgabe wird dadurch gelöst, daß das plastifizierte Celluloseacetat zusätzlich einen äußeren Weichmacher B in Form eines Oligomers eines cyclischen Esters enthält, wobei die endständige Carboxylgruppe des Oligomers mit einem Alkohol und/oder einem mindestens eine freie Hydroxylgruppe aufweisenden Alkoholderivat eines Siedepunktes von mindestens etwa 120°C und eines Schmelzpunktes von nicht mehr als etwa 180°C verestert ist und das Gewichtsverhältnis der Komponenten A und B durch die Formel (1)

$$0{,}3 \leq A/(A + B) \leq 0{,}95 \qquad (1)$$

wiedergegeben wird.

Besonders bevorzugt wird es, wenn das Gewichtsverhältnis A/(A+B) mindestens 0,5 bis 0,9, insbesondere 0,7 bis 0,9 beträgt. Wird der untere Grenzwert von 0,3 obiger Formel (I) unterschritten, d.h. der Anteil des Oligomers B angehoben, dann sinkt der Erweichungsbereich so weit ab, daß das Produkt bei Raumtemperatur weich ist. Somit ist kein vernünftiger Produkteinsatz mehr möglich. Wird der obere Grenzwert von 0,95 überschritten, dann wird die thermoplastische Verarbeitung ausgeschlossen bzw. in einer Weise erschwert, daß eine praktische Verwirklichung der Erfindung nicht möglich ist. Bei einem Wert von etwa 0,5 werden ausreichende Festigkeitswerte und günstig tiefe Verarbeitungstemperaturen erzielt. Ein vorteilhafter Grenzwert von etwa 0,8 führt zu einer höheren Verarbeitungstemperatur; dieser Wert bietet den Vorteil, daß das Produkt gute mechanische Festigkeit aufweist und wirtschaftlicher herstellbar ist.

Bei der Wahl des geeigneten Alkohols bzw. Alkoholderivats mit mindestens einer freien Hydroxylgruppe unterliegt die Erfindung der Einschränkung, daß dessen Siedepunkt mindestens etwa 120°C, insbesondere mindestens etwa 140°C, betragen und dessen Schmelzpunkt nicht über etwa 180°C, insbesondere nicht über etwa 160°C, liegen sollte.

Der Alkohol kann ein- oder mehrwertig sein, wobei er insbesondere zwei- oder dreiwertig ist. Es kann sich um einen primären, sekundären oder tertiären Alkohol handeln. Dieser kann gesättigt, aber auch ungesättigt sein, insbesondere eine Doppelbindung aufweisen, sofern diese keinen Einfluß auf die angestrebten Effekte hat. Beispielsweise wäre ein Allylalkohol geeignet. Der Alkohol kann aliphatisch, aromatisch, alicyclisch oder auch heterocyclisch sein. Unter den einwertigen Alkoholen sind besonders geeignet: Pentanol, Hexanol, Oktanol sowie der Dodecyl- oder Laurylalkohol, jeweils bevorzugt in ihrer n-Konfiguration, aber auch in Form der denkbaren Isomeren, ein "Wachsalkohol", wie n-Hexadecyl- oder Cetyl-, Ceryl- oder Myricylalkohol. Bevorzugt werden Alkohole mit 2 bis 6 Hydroxylgruppen. Dabei stehen die zweiwertigen Alkohole, insbesondere die 1,2-Diole (Glykole), wie Ethylenglykol und Propylenglykol, bzw. andere Oligoethylenglykole, insbesondere Diethylenglykol, Triethylenglykol und Tetraethylenglykol, und die dreiwertigen Alkohole, insbesondere 1,2,3-Propantriol (Glycerin), 1,2,4-Butantriol und 1,2,6-Hexantriol, im Vordergrund. Unter den vierwertigen Alkoholen werden Erythritol, unter den fünfwertigen Alkoholen Arabitol, Adonitol und Xylitol und unter den sechswertigen Alkoholen Sorbitol, Mannitol und Dulcitol bevorzugt. Unter den aromatischen Alkoholen werden insbesondere Benzylalkohol, Diphenylmethanol und Triphenylmethanol, unter den alicyclischen Alkoholen insbesondere die einwertigen Alkohole Cyclobutanol, Cyclopentanol, Cyclohexanol und Cycloheptanol, aber auch zweiwertige alicyclische Alkohole, wie insbesondere Cyclohexandiol bevorzugt.

Auch sind Derivate der obigen Alkohole geeignet, so beispielsweise in alkoxylierter Form, wie insbesondere in methoxylierter und ethoxylierter Form. So ließe sich beispielsweise eine Hydroxylgruppe der oben bezeichneten zweiwertigen Alkohole und auch der dreiwertigen Alkohole mit einer Alkoxygruppe, insbesondere einer Methoxy- oder Ethoxygruppe, substituieren. Die angesprochene Alkoxygruppe hat vorzugsweise 1 bis 4 Kohlenstoffatome. Hierbei handelt es sich also um die Ausbildung von Etherbindungen. Darüber hinaus könnte eine Esterbindung dadurch geschaffen werden, daß eine oder mehrere Hydroxylgruppen mit einer geeigneten Carbonsäure verestert sind, wobei insbesondere die Essigsäure in Frage kommt. In jedem Fall muß sowohl bei der Veresterung als auch bei der Veretherung mindestens eine Hydroxylgruppe des Alkohols für die nachstehend noch näher erläuterten chemischen Reaktionen mit dem cyclischen Ester zur Verfügung stehen. Auch die Alkoholderivate unterliegen den oben bezeichneten Rahmenbedingungen bzgl. Mindestsiedepunkt bzw. Höchstschmelzpunkt.

Um besondere Effekte zu erzielen, können Mischungen der oben bezeichneten Alkohole bzw. Alkoholderivate eingesetzt werden, insbesondere in Form eines Gemisches aus Glycerin und Sorbitol, wobei dieses Gemisch 5 bis 95 Masse-%, insbesondere 65 bis 85 Masse-% Sorbitol enthält.

Auch bei der Wahl des cyclischen Esters gibt die vorliegende Erfindung breiten Raum. Es kann sich um einfache cyclische Ester und auch um cyclische Doppelester von Hydroxycarbonsäuren handeln. Die einfachen cyclischen Ester sind die "Lactone" und die cyclischen Doppelester die "Lactide". Die besonders geeigneten cyclischen Ester enthalten im Ring 3 bis 6 Kohlenstoffatome und ein oder zwei Sauerstoffatome und lassen sich durch die nachfolgenden Formeln (I) bis (VII) wiedergeben:

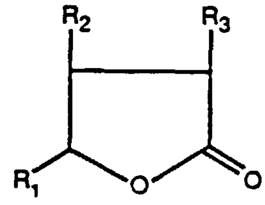

(I)

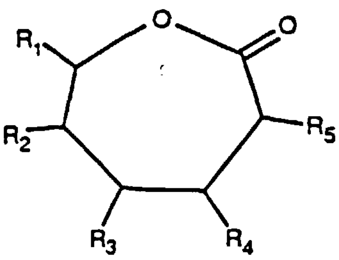

(II)

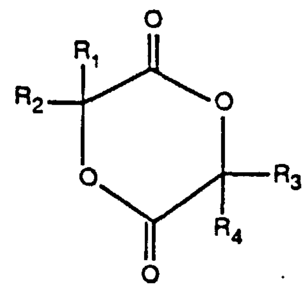

(III)

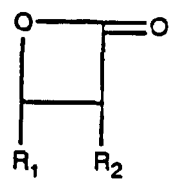

(IV)

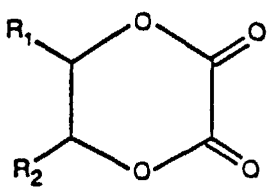

(V)

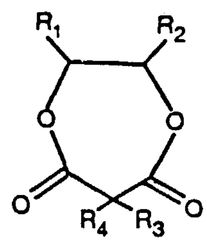

(VI)

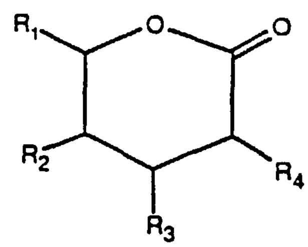

(VII)

In den Formeln (I) bis (VII) können die Reste $R_1$ bis $R_5$ jeweils unabhängig voneinander, bedeuten: Wasserstoff, eine niedere Alkylgruppe mit 1 bis 10 Kohlenstoffatomen, insbesondere 1 bis 4 Kohlenstoffatomen, wid die Methyl-, Ethyl-, n-Propyl-, i-Propyl- und die i-Butylgruppe sowie die verschiedenen Isomeren hiervon, eine Cycloalkylgruppe mit 3 bis 6 Kohlenstoffatomen, wie insbesondere die Cyclopropyl-, Cyclobutyl-, Cyclopentyl- sowie Cyclohexylgruppe, eine Aralkylgruppe mit 7 bis 18 Kohlenstoffatomen, insbesondere die Benzyl- und Phenethylgruppe, eine Alkylarylgruppe mit 7 bis 18 Kohlenstoffatomen, insbesondere die Tolylgruppe, sowie eine heterocyclische Gruppe mit 2 bis 5 Kohlenstoffatomen, insbesondere solche, in deren heterocyclischen Ring sich mindestens ein Sauerstoff-, Schwefel- oder N-Atom befindet, wie insbesondere die Radikale des Oxirans, Tetrahydrofurans, Dioxans sowie Pyrans, eine Arylgruppe in Form eines Phenyl- oder Naphthylrestes, wobei die Arylreste mit einem $C_1$-$C_4$-Alkylrest substituiert sein können.

Das Gewichtsverhältnis von Alkohol bzw. Alkoholderivat zu dem jeweiligen Ester unterliegt weiten Schwankungen. Bevorzugt wird das Gewichtsverhältnis zwischen etwa 90:10 und 10:90, insbesondere etwa 70:30 bis 40:60, was insbesondere für die Kombination Glycerin und/oder Sorbitol mit ε-Caprolacton gilt.

In dem erfindungsgemäßen plastifizierten Celluloseacetat kann auch noch nicht umgesetztes Celluloseacetat vorliegen. Vorzugsweise liegt der Anteil dieses nicht umgesetzten Celluloseactats unter etwa 10 Masse-%, bezogen auf die beiden oben angesprochenen Komponenten A und B. Für den Fall, daß ein Überschuß an Alkohol, insbesondere Glycerin, eingesetzt und dieser nicht an ein ε-Caprolacton gebunden ist, ist dieses für die mit der Erfindung angestrebten Effekte nicht schädlich. Dadurch, daß ein Teil des Alkohols an ε-Caprolacton angekoppelt ist, wird dem ungebundenen verbliebenen Alkohol mit dem plastifizierten Celluloseacetat Verträglichkeit vermittelt. Im Rahmen der Erfindung ist es auch möglich, dem Material zur Erzielung besonderer Effekte unterschiedliche Additive einzuverleiben, so beispielsweise Pigmente, wie Titandioxid.

Bei der Wahl des erfindungsgemäß einzusetzenden Celluloseacetat-Ausgangsmaterials unterliegt die vorliegende Erfindung ebenfalls keinen wesentlichen Beschränkungen. Im allgemeinen kann der Substitutionsgrad (DS) zwischen etwa 1,2 und 2,95, insbesondere zwischen etwa 1,9 und 2,9 und ganz besonders bevorzugt zwischen etwa 1,9 und 2,7 liegen. Der Polymerisationsgrad (DP) liegt hier im allgemeinen zwischen etwa 150 und 300, insbesondere zwischen etwa 170 und 260.

Das erfindungsgemäße plastifizierte Celluloseacetat läßt sich nach den nachfolgend beschriebenen Verfahren A) und B) herstellen.

Das erfindungsgemäße Verfahren A) ist dadurch gekennzeichnet, daß ein Oligomer B in Form des Umsetzungsproduktes eines cyclischen Esters, insbesondere in Form von ε-Caprolacton, und eines mono- und/oder polyfunktionellen Alkohols und/oder eines mindestens eine freie Hydroxylgruppe aufweisenden Alkoholderivats in Gegenwart

eines Katalysators in der Schmelze mit einem hydroxylgruppenhaltigen Celluloseacetat umgesetzt wird. Hierbei ist es bevorzugt, daß das hydroxylgruppenhaltige Celluloseacetat mit einem Oligomer B, das durch die Reaktion von ε-Caprolacton und Glycerin und/oder Sorbitol erhalten worden ist, umgesetzt wird.

Vorzugsweise beträgt das Gewichtsverhältnis von hydroxylgruppenhaltigem Celluloseacetat zu Oligomer B etwa 70:30 bis 30:70. Des weiteren wird es bevorzugt, daß die Umsetzung beim Verfahren A) in der Schmelze etwa 2 min bis 6 h lang durchgeführt wird. Vorzugsweise wird die Schmelze auf eine Temperatur von 190 bis 220°C eingestellt. Das Gewichtsverhältnis von bevorzugtem Glycerin und/oder Sorbitol zu Caprolacton beträgt vorzugsweise etwa 90:10 bis 10:90, insbesondere etwa 70:30 bis 40:60.

Das erfindungsgemäße Verfahren B) ist dadurch gekennzeichnet, daß ein hydroxylgruppenhaltiges Celluloseacetat in-situ mit einem cyclischen Ester, insbesondere ε-Caprolacton, und einem mono- und/oder polyfunktionellen Alkohol und/oder einem mindestens eine freie Hydroxylgruppe aufweisenden Alkoholderivat in Gegenwart eines Katalysators in der Schmelze umgesetzt wird. Hierbei wird es bevorzugt, daß das hydroxylgruppenhaltige Celluloseacetat mit Glycerin und/oder Sorbitol und ε-Caprolacton umgesetzt wird. Die Temperatur der Schmelze beträgt vorzugsweise etwa 160 bis 210°C. Es wird bevorzugt, daß das Gewichtsverhältnis von hydroxylgruppenhaltigem Celluloseacetat zu der Ausgangsmischung aus bevorzugtem Glycerin und/oder Sorbitol und ε-Caprolacton zwischen etwa 90:10 und 30:70 liegt. Ferner ist das Gewichtsverhältnis von Glycerin und/oder Sorbitol zu ε-Caprolacton von etwa 90:10 bis 10:90, insbesondere 70:30 bis 40:60, bevorzugt.

Den beiden oben beschriebenen Verfahren A) und B) sind, wie gezeigt, erhebliche Gemeinsamkeiten zuzuschreiben. Das gilt z.B. auch für den Einsatz der Alkohole bzw. - derivate, die bereits vorstehend beschrieben wurden.

Auch bei der Auswahl der Katalysatoren zur Durchführung des erfindungsgemäßen Verfahrens gemäß den Varianten A) und B) unterliegt die vorliegende Erfindung keiner relevanten Einschränkung. Insbesondere kommen Katalysatoren in Frage, die bereits eingangs bei der Erläuterung des Standes der Technik nach der GB-A-2 152 944 angesprochen wurden. Bevorzugt sind organometallische Verbindungen, wie Dibutylzinndilaurat, Dibutylzinnoxid, Zinkacetylacetonat, Zinkacetat-dihydrat, Titan(IV)-butylat und Titan(IV)-propylat. Dabei wird es bei den Verfahrensvarianten A) und B) bevorzugt, daß die Katalysatorkonzentration in dem Umsetzungsmedium etwa 0,1 bis 1 Masse-% beträgt.

Nachfolgend sollen die beiden erfindungsgemäßen Verfahren noch näher erläutert werden, wobei auf die besonders bevorzugten Ausgestaltungen abgestellt wird, nach denen ε-Caprolacton und Glycerin den plastifizierenden Anteil bilden. Sofern es ohne weiteres ersichtlich ist, sollen diese Ausführungen auch entsprechend für andere cyclische Ester und andere Alkohole bzw. Alkoholderivate gelten, auf die vorstehend bereits eingegangen wurde:

Die Vorteile des Verfahrens B) liegen u.a. darin, daß das Celluloseacetat durch die Mischung aus dem Alkohol bzw. Alkoholderivat und dem cyclischen Ester, der eine Weichmacherfunktion zugeschrieben werden kann, vorgequollen wird. Dies gilt insbesondere für den Einsatz von Glycerin und ε-Caprolacton. Gegenüber dem Verfahren A) kann der ε-Caprolactonanteil, bezogen auf das Gemisch aus ε-Caprolacton und Glycerin, gesenkt werden, so beispielsweise auf etwa 25 Masse-%. Beim Verfahren B) konkurriert das ε-Caprolacton mit den Hydroxylgruppen des Celluloseacetats und des Glycerins.

Oligomerisiert man ε-Caprolacton mit Glycerin in Gegenwart von hydroxylgruppenhaltigem Celluloseacetat nach dem Verfahren B), dann können Verträglichkeitsprobleme eliminiert und die Reaktionszeit für die Herstellung der Mischung und gleichzeitig der Bedarf an ε-Caprolacton deutlich reduziert werden. Beispielsweise wurde Cellulose-2,5-acetat mit 25 Masse-% ε-Caprolacton und 25 Masse-% Glycerin zwei h bei 200°C in Gegenwart von 0,5 % Dibutylzinndilaurat, 1000 ppm Irganox 1010 (Funktion: Antioxidationsmittel) und 500 ppm Irgafos 168 (Funktion: Verarbeitungshilfsmittel) umgesetzt. Der Restgehalt an ε-Caprolacton bzw. Glycerin lag unter 1,5 Masse-%. Die Analyse mittels Gelpermeationschromatographie zeigte, daß neben gepfropftem Cellulose-2,5-acetat auch das Oligocaprolacton B entstanden ist.

Bei einer bevorzugten Ausgestaltung des erfindungsgemäßen Verfahrens nach der Variante A) werden zunächst ε-Caprolacton und Glycerin in der im späteren Beispiel 3 beschriebenen Weise zu einem trihydroxyterminierten Oligocaprolacton umgesetzt.

Dieses Oligocaprolacton B wird in der Schmelze mit dem hydroxygruppenhaltigen Celluloseacetat umgesetzt. Dabei läuft primär folgender Vorgang ab: Ankopplung des Oligocaprolactonanteils an die Celluloseacetatkette durch Reaktion mit einer freien Hydroxylgruppe oder Umesterungsreaktion an einer Acetylgruppe. Des weiteren kann bei der Herstellung des Oligocaprolactons B verbleibendes Caprolacton in der Schmelze in-situ auf das Celluloseacetat bzw. verbleibendes Glycerin aufgepfropft werden. Damit ist ein teures Aufarbeiten und Reinigen des Oligocaprolactons B nicht nötig.

Bei dem Verfahren A) ist das Gewichtsverhältnis der bevorzugten Ausgangsmaterialien in Form von Glycerin und ε-Caprolacton für das damit erhaltene plastifizierte Celluloseacetat von Bedeutung. Um den Einfluß unterschiedlich langer Oligocaprolactonketten auf die Eigenschaften des erfindungsgemäß angestrebten plastifizierten Celluloseacetats zu untersuchen, wurde das Gewichtsverhältnis von Glycerin zu ε-Caprolacton zwischen 1:1 und 1:9 variiert. Dies entspricht einem Molverhältnis Glycerin/ε-Caprolacton von 1:1,24 bzw. 1:7,3. Die mittlere Molmasse (Gewichtsmittel) des Oligocaprolactons B beträgt 5100 bzw. 8000 (auf Polystyrol geeichte GPC). Bei dem Versuch, die Oligocaprolactone B mit Celluloseacetat zu legieren, zeigte es sich, daß bei einem hohen ε-Caprolactonanteil (90 Masse-%) auch bei längeren Reaktionszeiten in der Schmelze mit Celluloseacetat keine vollständige Durchmischung erreichbar ist. Der prozentuale Anteil des ε-Caprolactons in dem Gemisch Glycerin/ε-Caprolacton wurde bei der Herstellung der Oligocaprolactone B zwischen etwa 75 bis 90 Masse-% variiert. Die höhermolekularen trihydroxyterminierten Oligocaprolactone waren z.B. mit Cellulose-2,5-Acetat nicht mischbar. Oligocaprolactone B auf Caprolactonbasis mit etwa 66 Masse- % ε-Caprolacton sind für Celluloseacetate besonders günstige plastifizierende Mittel. Im Unterschied zum in-situ Pfropfen mit ε-Caprolacton sind die Schmelzviskositäten und Reaktionszeiten für den Prozeß deutlich höher.

Die Reaktionstemperatur ist bei der Durchführung des Verfahrens A) von Bedeutung. So stellt sich bei einer Temperatur unterhalb 190°C für die oben angesprochenen Oligocaprolactone B keine Schmelze ein. Bei einer Reaktionstemperatur von 180°C kann selbst nach 6 Stunden keine vollständige Mischung der Komponenten erreicht werden, so daß keine Schmelze erhalten wird. Vorzugsweise wird die Schmelzreaktion bei mehr als etwa 200°C, insbesondere etwa 210°C bis 220°C, durchgeführt.

Der Restgehalt an monomerem Caprolacton und Glycerin kann bei beiden Verfahrensvariaten durch Anlegen von Vakuum am Ende der Reaktion auf vernachlässigbare Werte (0,1 Masse-% Caprolacton, 0,2 Masse-% Glycerin) verringert werden.

Weitere Versuche haben gezeigt, daß die Steigerung des Celluloseacetat-Anteils bei beiden Verfahrensvarianten zu einem Anstieg der Viskosität während der Verarbeitung führt. Die Erweichungs- und Schmelzpunkte sinken mit zunehmendem Anteil an Oligocaprolacton B, während die Zersetzungspunkte ansteigen. Das Molekulargewicht (Mw) sinkt mit abnehmendem Celluloseacetatanteil. Mit zunehmendem trihydroxyterminierten Oligocaprolactonanteil nimmt die Weichheit der Probe zu; Zugspannung, Dehnung, E-Modul und Bruchdehnung sinken ab. Ein höherer Celluloseacetatanteil verschiebt die Eigenschaften in Richtung zu reinem Celluloseacetat, jedoch ist der Einfluß der Caprolactonanteile ist noch deutlich zu beobachten.

Die Katalysatorkonzentration hat einen Einfluß auf die nach dem Verfahren A) erhaltenen plastifizierten Celluloseacetate. So wird das Viskositätsmaximum im Kneter mit steigender Katalysatorkonzentration schneller erreicht, beispielsweise im Falle einer Konzentration von 0,1 Masse-% DBTDL (Dibutylzinndilaurat) nach 115 min, bei 0,5 Masse-% nach 95 min und bei 1 Masse-% nach 85 min. Es zeigt sich, daß die Erhöhung der Katalysatorkonzentration eine deutliche Erhöhung der Reaktionsgeschwindigkeit bewirkt.

Im Vergleich zu der in-situ Pfropfung mit ε-Caprolacton und Glycerin (Verfahren B)) dauerte es länger (1 Stunde), bis bei den vorteilhaften Schmelztemperaturen eine Schmelze entstanden ist, die die wünschenswerte Legierung bewirkt.

Diemit der Erfindung verbundenen Vorteile sind insbesondere darin zu sehen, daß ein plastifiziertes Celluloseacetat erhältlich ist, dessen Schmelzpunkt gegenüber den Produkten des Standes der Technik gesenkt ist, wobei bei der Herstellung dieses Produktes wirtschaftlich verfahren werden kann. Die erfindungsgemäß plastifizierten Celluloseacetate sind besonders zur Herstellung von Filamenten durch Verspinnen aus der Schmelze geeignet.

Die Erfindung soll nachfolgend anhand verschiedener Beispiele sowie Vergleichsbeispiele und Testberichte über die physikalischen Eigenschaften verschiedener erprobter Substanzen noch näher erläutert werden:

1. Vergleichsbeispiel (in-situ Pfropfung von hydroxylgruppenhaltigem Celluloseacetat mit ε-Caprolacton)

Im IKAVISC-Meßkneter werden unter den Bedingungen der Tabelle 1 ein Gemisch aus dem Antioxidanz Irganox 1010 (Warenzeichen) (1000 ppm) (chem. Bezeichnung: 2,6 Di-tert.-butyl-1-hydroxyphenyl)propionsäureester des Pentaerythrits, vertrieben von der Firma Ciba Geigy), dem Verarbeitungshilfsmittel Irgafos 168 (Warenzeichen) (500 ppm) (chem. Bezeichnung: Phenol,-2,4-bis(1,1-dimethylethyl)-,phosphit(3:1), vertrieben von der Firma Ciba Geigy) und einem restliche Hydroxylgruppen enthaltenden Celluloseacetat (DS: 2,5 und DP: 220) unter Vakuum (40 mbar) auf 100°C erwärmt. Dieses Gemisch wird unter $N_2$-Atmosphäre auf die Reaktionstemperatur erhitzt. Nach vorsichtiger Zugabe des ε-Caprolactons und des Katalysators (Dibutyldizinndilaurat/DBTDL) wird die Reaktion gestartet und während der angegebenen Zeit unter leichtem $N_2$-Überdruck geknetet. Die Viskosität wird automatisch registriert. Nach Abschalten des Thermostats wird zum Abkühlen auf 160°C weitergeknetet und dann bis zu einer Temperatur von 110°C Vakuum (40 mbar) angelegt, um nicht umgesetztes Monomer abzuziehen. Das Rohprodukt wird noch in der Wärme entnommen. Es wird eine harte Masse erhalten, die in einem Hammerwerk zerkleinert wird.

Die einzelnen Verfahrensparameter sind in den folgenden Tabellen I und II zusammengestellt:

Tabelle I

| (Verfahrensparameter bei der in-situ Pfropfung) | | | | | | | |
|---|---|---|---|---|---|---|---|
| Probe | Cellulose-acetat (mmol) (g) | ε-Caprolacton (mol) (g) | DBTDL (%) (g) | Irganox 1010 (ppm) (g) | Irgafos 168 (ppm) (g) | Dauer*) (g) | Temperatur (°C) |
| | | | | | | | |
| 1 | 1,7 | 0,9 | 0,5 | 1000 | 500 | 6,5 | 180 |
| | 100 | 100 | 0,9 | 0,22 | 0,1 | | |
| 2 | 1,7 | 0,9 | 0,5 | 1000 | 500 | 3,5 | 180 |
| | 100 | 100 | 0,91 | 0,2 | 0,1 | | |
| 3 | 1,7 | 0,9 | 0,5 | 1000 | 500 | 4,25 | 180 |
| | 100 | 100 | 0,91 | 0,2 | 0,1 | | |
| 4 | 1,7 | 0,9 | 0,5 | 1000 | 500 | 2,5 | 180 |
| | 100 | 100 | 0,91 | 0,2 | 0,1 | | |
| 5 | 1,7 | 0,9 | 0,5 | 1000 | 500 | 6,5 | 180 |
| | 100 | 100 | 0,91 | 0,2 | 0,1 | | |

Anmerkung: *) Die Dauer setzt sich aus der eigentlichen Reaktionszeit und der Abkühl phase von 30 min zusammen.

| Fortsetzung Tabelle I (Eigenschaften) | | |
|---|---|---|
| Probe | Schmelztemperatur (°C) | Zersetzungstemperatur (°C) |
| | | |
| 1 | 220 | 269 |
| 2 | 224 | > 250 |
| 3 | 236 | > 250 |
| 4 | 236 | > 250 |
| 5 | 248 | > 250 |

| Fortsetzung Tabelle (I) (Eigenschaften): | | | | |
|---|---|---|---|---|
| Probe | Zugspannung (MPa) | Dehnung (%) | E-Modul (MPa) | Energie (mJ) |
| | | | | |
| 1 | 19,2 | 83 | 441 | 167,1 |
| 2 | 18,9 | 92 | 361 | 149,3 |
| 3 | 20,6 | 110 | 414 | 165,2 |
| 4 | 14,4 | 163 | 214 | 47,0 |
| 5 | 17,8 | 111 | 425 | 75,0 |

Beispiel 1 (Legierung von Cellulose-2,5-Acetat mit modifizierten Glycerinen)

Im Meßkneter werden die in der nachfolgenden Tabelle II angegebenen Mengen des trihydroxyterminierten Oligomers B (Probe 12 gemäß Tabelle IV, hergestellt nach Beispiel 3) vorgelegt. Unter $N_2$-Atmosphäre wird auf die angegebene Temperatur erwärmt. Nach Zugabe von Cellulose-2,5-Acetat, Irganox 1010, Irgafos 168 und DBTDL werden die Meßkurven automatisch aufgenommen.

Nach der angegebenen Reaktionsdauer wird bis zum Erreichen einer Temperatur von 110°C Vakuum (40 mbar) angelegt. Das Rohprodukt wird noch in der Wärme entnommen. Man erhält eine harte Masse, die in einem Hammerwerk zerkleinert wird. Die einzelnen Parameter sind aus der folgenden Tabelle II ersichtlich.

Tabelle II

| Probe | Cellulose-acetat (mmol) (g) | Oligomer B (mol) (g) | DBTDL (%) (g) | Irganox 1010 (ppm) (g) | Irgafos 168 (ppm) (g) | Dauer*) (h) | Temperatur (°C) |
|---|---|---|---|---|---|---|---|
| | | | | | | | |
| 6 | 1,7 | 0,31 | 0,5 | 1000 | 500 | 4,5 | 200 |
| | 100 | 100 | 0,9 | 0,2 | 0,1 | | |
| 7 | 1,7 | 0,31 | 0,5 | 1000 | 500 | 2,5 | 200 |
| | 100 | 100 | 0,9 | 0,2 | 0,1 | | |
| 8 | 2,38 | 0,19 | 0,5 | 1000 | 500 | 2,5 | 200 |
| | 140 | 60 | 0,9 | 0,2 | 0,1 | | |
| 9 | 1,02 | 0,19 | 0,1 | 1000 | 500 | 2,5 | 200 |
| | 60 | 60 | 0,1 | 0,12 | 0,06 | | |
| 10 | 1,02 | 0,19 | 1 | 1000 | 500 | 2,5 | 200 |
| | 60 | 60 | 1,1 | 0,12 | 0,06 | | |

Anmerkung: *) Die Dauer setzt sich aus der eigentlichen Reaktionszeit und der Abkühl phase von 30 min zusammen

| Fortsetzung Tabelle II (Eigenschaften) | | |
|---|---|---|
| Probe | Schmelztemperatur (°C) | Zersetzungstemperatur (°C) |
| | | |
| 6 | 208 | > 272 |
| 7 | 214 | > 272 |
| 8 | 210 | > 272 |
| 9 | 205 | > 272 |
| 10 | 206 | > 272 |

| Fortsetzung Tabelle II (Eigenschaften): | | | | |
|---|---|---|---|---|
| Probe | Zugspannung (MPa) | Dehnung (%) | E-Modul (MPa) | Energie (mJ) |
| | | | | |
| 6 | 7,9 | 40 | 261 | 553 |
| 7 | 12,3 | 17 | 407 | 300 |
| 8 | 27,5 | 62 | 738 | 2000 |
| 9 | 9,5 | 13 | 347 | 140 |
| 10 | 7,3 | 8 | 335 | 69 |

Beispiel 2 (Legierung von Cellulose-2,5-Acetat mit ε-Caprolacton und Glycerin)

Im Meßkneter werden die in Tabelle III angegebenen Mengen an Antioxidanz Irganox 1010 (1000 ppm), Verarbeiter Irgafos 168 (500 ppm) und Cellulose-2,5-Acetat vermischt und unter Vakuum (40 mbar) auf 100°C erwärmt. Unter $N_2$-Atmosphäre wird auf die Reaktionstemperatur erhitzt. Nach vorsichtiger Zugabe des ε-Caprolactons, des Glycerins

und des Katalysators wird die Reaktion gestartet und während der angegebenen Zeit unter leichtem $N_2$-Überdruck geknetet. Nach Abschalten des Thermostats wird bis zum Abkühlen auf 160°C weitergeknetet und dann bis zu einer Temperatur von 110°C Vakuum (40 mbar) angelegt, um nicht umgesetztes Monomer abzuziehen. Das Rohprodukt wird noch in der Wärme entnommen. Es wird eine harte Masse erhalten, die in einem Hammerwerk zerkleinert wird. Die Reaktionsparameter sind in der nachfolgenden Tabelle III zusammengestellt.

Tabelle III

| Probe | Cellulose-acetat (mmol) (g) | Caprolacton (mol) (g) | Glycerin (mol) (g) | DBTDL (%) (g) | Irganox 1010 (ppm) (g) | Irgafos 168 (ppm) (g) | Dauer (h) | Temperatur (°C) |
|---|---|---|---|---|---|---|---|---|
| | | | | | | | | |
| 11 | 1,7 | 0,16 | 0,69 | 0,5 | 1000 | 500 | 2 | 200 |
| | 100 | 50 | 50 | 0,9 | 0,2 | 0,1 | | |

| Fortsetzung Tabelle III (Eigenschaften) | | | | | | |
|---|---|---|---|---|---|---|
| Probe | Schmelztemperatur (°C) | Zersetzungstemperatur (°C) | Zugspannung (MPa) | Dehnung (%) | E-Modul (MPa) | Energie (mJ) |
| | | | | | | |
| 11 | 209 | > 272 | 11,4 | 190 | 78 | 1661 |

Beispiel 3 (Herstellung der nach Beispiel 1 verwendeten Oligomers B auf Glycerinbasis)

Glycerin wird in den in der nachfolgend Tabelle IV angegebenen Verhältnissen mit ε-Caprolacton und mit 0,5 Masse-% DBTDL im Meßrührer 5 Stunden auf 220°C erhitzt. Während des Abkühlens wird durch Anlegen eines Vakuums (1h) überschüssiges ε-Caprolacton entfernt. Das Produkt wird noch warm in Vorratsbehälter abgefüllt, in denen es nach einigen Stunden zu einer weiß-gelblichen Masse wachsartiger Konsistenz erstarrt.

Tabelle IV

| Probe | Caprolacton (mol) (g) | Glycerin (mol) (g) | DBTDL (%) (g) | Temperatur (°C) | Dauer (h) | Ausbeute (%) |
|---|---|---|---|---|---|---|
| | | | | | | |
| 11 | 125 (1,71) | 375 (3,3) | 2,81 (0,5) | 220 | 5 | 94 |

**Patentansprüche**

**1.** Plastifiziertes Celluloseacetat mit einem Gehalt an einem modifizierten Celluloseacetat A, das ein aufgepfropftes Oligomer eines cyclischen Esters, insbesondere in Form von ε-Caprolacton, aufweist, dadurch gekennzeichnet, daß das plastifizierte Celluloseacetat zusätzlich einen äußeren Weichmacher in Form eines Oligomers B eines cyclischen Esters enthält, wobei die endständige Carboxylgruppe des Oligomers B mit einem Alkohol und/oder einem mindestens eine freie Hydroxylgruppe aufweisenden Alkoholderivat eines Siedepunktes von mindestens etwa 120°C und eines Schmelzpunktes von nicht mehr als etwa 180°C verestert ist und das Gewichtsverhältnis der Komponenten A und B durch die Formel (1)

$$0{,}3 \leq A/(A + B) \leq 0{,}95 \qquad (1)$$

wiedergegeben wird.

**2.** Plastifiziertes Celluloseacetat nach Anspruch 1, dadurch gekennzeichnet, daß der Siedepunkt des Alkohols bzw. des Alkoholderivats mindestens etwa 140 und/oder der Schmelzpunkt des Alkohols und des Alkoholderivats nicht über etwa 160°C liegen.

**3.** Plastifiziertes Celluloseacetat nach Anspruch 1 oder 2, dadurch gekennzeichnet, daß der Alkohol ein polyfunktioneller Alkohol ist.

**4.** Plastifiziertes Celluloseacetat nach Anspruch 3, dadurch gekennzeichnet, daß der polyfunktionelle Alkohol Glycerin und/oder Sorbitol ist.

**5.** Plastifiziertes Celluloseacetat nach mindestens einem der vorhergehenden Ansprüche, dadurch gekennzeichnet, daß das Gewichtsverhältnis A/(A+B) etwa 0,5 bis 0,9, insbesondere etwa 0,7 bis 0,9, beträgt.

**6.** Plastifiziertes Celluloseacetat nach mindestens einem der vorhergehenden Ansprüche, dadurch gekennzeichnet, daß das Gewichtsverhältnis von Alkohol bzw. Alkoholderivat zu cyclischem Ester zwischen etwa 90:10 und 10: 90, insbesondere etwa 70:30 bis 40:60, liegt.

**7.** Plastifiziertes Celluloseacetat nach mindestens einem der vorhergehenden Ansprüche, dadurch gekennzeichnet, daß der cyclische Ester ein einfacher Ester oder ein cyclischer Doppelester ist, wobei diese im Ring 3 bis 6 Kohlenstoffatome und 1 oder 2 Sauerstoffatome aufweisen.

**8.** Plastifiziertes Celluloseacetat nach Anspruch 7, dadurch gekennzeichnet, daß die cyclischen Ester durch die folgenden Formeln (I) bis (VII) wiedergegeben werden

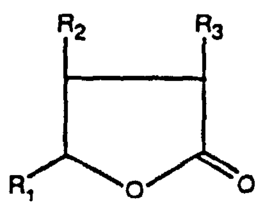
(I)

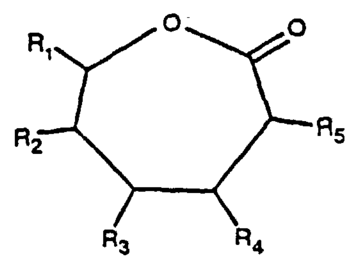
(II)

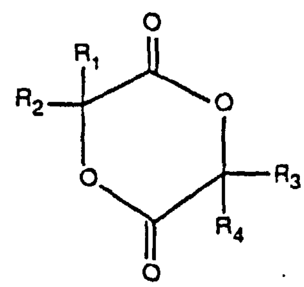
(III)

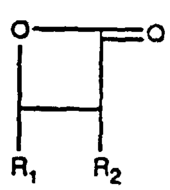
(IV)

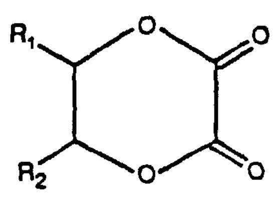
(V)

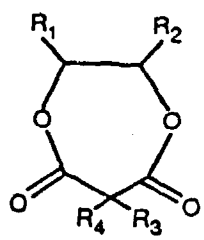
(VI)

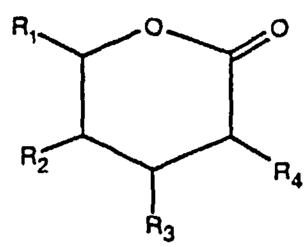
(VII)

worin bedeuten: $R_1$ bis $R_5$ jeweils unabhängig voneinander eine niedere Alkylgruppe mit 1 bis 10 Kohlenstoffatomen, insbesondere 1 bis 4 Kohlenstoffatomen, wie die Methyl-, Ethyl-, n-Propyl-, i-Propyl- und die i-Butylgruppe sowie die verschiedenen Isomeren hiervon, eine Cycloalkylgruppe mit 3 bis 6 Kohlenstoffatomen, wie insbesondere die Cyclopropyl-, Cyclobutyl-, Cyclopentyl- sowie Cyclohexylgruppe, eine Aralkylgruppe mit 7 bis 18 Kohlenstoffatomen, insbesondere die Benzyl- und Phenethylgruppe, eine Alkylarylgruppe mit 7 bis 18 Kohlenstoffatomen, insbesondere die Tolylgruppe, sowie eine heterocyclische Gruppe mit 2 bis 5 Kohlenstoffatomen, insbesondere solche, in deren heterocyclischen Ring sich mindestens ein Sauerstoff-, Schwefel- oder N-Atom befindet, wie insbesondere die Radikale des Oxirans, Tetrahydrofurans, Dioxans sowie Pyrans, eine Arylgruppe in Form eines Phenyl- oder Naphthylrestes, wobei die Arylreste mit einem $C_1$-$C_4$-Alkylrest substituiert sein können.

**9.** Plastifiziertes Celluloseacetat nach Anspruch 8, dadurch gekennzeichnet, daß der cyclische Ester ein einfacher Ester in Form von β-, δ-, ε- und höhergliedrigen Lactonen ist.

10. Plastifiziertes Celluloseacetat nach Anspruch 9, dadurch gekennzeichnet, daß der cyclische Ester ε-Caprolacton ist.

11. Verfahren zur Herstellung eines plastifizierten Celluloseacetats nach mindestens einem der Ansprüche 1 bis 10, dadurch gekennzeichnet, daß ein Oligomer B in Form des Umsetzungsproduktes eines cyclischen Esters, insbesondere in Form von ε-Caprolacton, und eines mono- und/oder polyfunktionellen Alkohols und/oder eines mindestens eine freie Hydroxylgruppe aufweisenden Alkoholderivats in Gegenwart eines Katalysators in der Schmelze mit einem hydroxylgruppenhaltigen Celluloseacetat umgesetzt wird.

12. Verfahren nach Anspruch 11, dadurch gekennzeichnet, daß als Katalysator Dibutylzinndilaurat, Dibutylzinnoxid, Zinkacetylacetonat, Zinkacetatdihydrat, Titan (IV)-butylat und/oder Titan (IV)-propylat eingesetzt wird.

13. Verfahren nach Anspruch 11 oder 12, dadurch gekennzeichent, daß das hydroxylgruppenhaltige Celluloseacetat mit einem Oligomer B, das durch die Reaktion von ε-Caprolacton und Glycerin und/oder Sorbitol erhalten worden ist, umgesetzt wird.

14. Verfahren nach mindestens einem der Ansprüche 11 bis 13, dadurch gekennzeichnet, daß die Schmelze auf eine Temperatur von etwa 190 bis 220°C eingestellt wird.

15. Verfahren nach mindestens einem der Ansprüche 11 bis 14, dadurch gekennzeichnet, daß der Katalysator in einer Konzentration von etwa 0,1 bis 1 Masse- % eingesetzt wird.

16. Verfahren nach mindestens einem der Ansprüche 11 bis 15, dadurch gekennzeichnet, daß das Gewichtsverhältnis von hydroxylgruppenhaltigem Celluloseacetat zu Oligomer B auf etwa 70:30 bis 30:70 eingestellt wird.

17. Verfahren nach mindestens einem der vorhergehenden Ansprüche 13 bis 16, dadurch gekennzeichnet, daß das Gewichtsverhältnis von Glycerin und/oder Sorbitol zu ε-Caprolacton auf etwa 90:10 bis 10:90, insbesondere etwa 70:30 bis 40:60, eingestellt wird.

18. Verfahren nach mindestens einem der Ansprüche 11 bis 17, dadurch gekennzeichnet, daß die Umsetzung in der Schmelze etwa 2 Minuten bis 6 Stunden lang durchgeführt wird.

19. Verfahren zur Herstellung eines plastifizierten Celluloseacetats nach mindestens einem der Ansprüche 1 bis 10, dadurch gekennzeichnet, daß ein hydroxylgruppenhaltiges Celluloseacetat in-situ mit einem cyclischen Ester, insbesondere mit ε-Caprolacton, und einem mono- und/oder polyfunktionellen Alkohol und/oder einem mindestens eine freie Hydroxylgruppe aufweisenden Alkoholderivat in Gegenwart eines Katalysators in der Schmelze umgesetzt wird.

20. Verfahren nach Anspruch 19, dadurch gekennzeichnet, daß als Katalysator Dibutylzinndilaurat, Dibutylzinnoxid, Zinkacetylacetonat, Zinkacetatdihydrat, Titan (IV)-butylat und/oder Titan (IV)-propylat eingesetzt wird.

21. Verfahren nach Anspruch 19 oder 20, dadurch gekennzeichnet, daß ein polyfunktioneller Alkohol mit 2 bis 6 Hydroxylgruppen eingesetzt wird.

22. Verfahren nach mindestens einem der Ansprüche 19 bis 21, dadurch gekennzeichnet, daß das hydroxylgruppenhaltige Celluloseacetat mit Glycerin und/oder Sorbitol und ε-Caprolacton umgesetzt wird.

23. Verfahren nach mindestens einem der Ansprüche 19 bis 22, dadurch gekennzeichnet, daß die Schmelze auf eine Temperatur von etwa 160 bis 210°C eingestellt wird.

24. Verfahren nach mindestens einem der Ansprüche 19 bis 23, dadurch gekennzeichnet, daß der Katalysator in einer Konzentration von etwa 0,1 bis 1 Masse- % eingesetzt wird.

25. Verfahren nach mindestens einem der Ansprüche 22 bis 24, dadurch gekennzeichnet, daß das Gewichtsverhältnis von hydroxylgruppenhaltigem Celluloseacetat zu der Ausgangsmischung aus Glycerin und/oder Sorbitol und ε-Caprolacton auf etwa 90:10 bis 30:70 eingestellt wird.

26. Verfahren nach mindestens einem der Ansprüche 22 bis 25, dadurch gekennzeichnet, daß das Gewichtsverhältnis

von Glycerin und/oder Sorbitol zu ε-Caprolacton auf etwa 90:10 bis 10:90, insbesondere etwa 70:30 bis 40:60, eingestellt wird.

**27.** Verwendung des plastifizierten Celluloseacetats nach einem der Ansprüche 1 bis 10 zur Herstellung von Filamenten durch Verspinnen aus der Schmelze.

**Claims**

**1.** Plasticized cellulose acetate having a content of a modified cellulose acetate A which contains a grafted oligomer of a cyclic ester, in particular in the form of ε-caprolactone, characterized in that the plasticized cellulose acetate additionally contains an external plasticizer in the form of an oligomer B of a cyclic ester, the terminal carboxyl group of the oligomer B being esterified with an alcohol and/or an alcohol derivative having at least one free hydroxyl group, which alcohol or alcohol derivative has a boiling point of at least about 120°C and a melting point of not more than about 180°C, and the weight ratio of the components A and B being given by the formula (1)

$$0.3 \leq A/(A + B) \leq 0.95 \qquad (1).$$

**2.** Plasticized cellulose acetate according to claim 1, characterized in that the boiling point of the alcohol or of the alcohol derivative is at least about 140 and/or the melting point of the alcohol and of the alcohol derivative is not above about 160°C.

**3.** Plasticized cellulose acetate according to claim 1 or 2, characterized in that the alcohol is a polyfunctional alcohol.

**4.** Plasticized cellulose acetate according to claim 3, characterized in that the polyfunctional alcohol is glycerol and/or sorbitol.

**5.** Plasticized cellulose acetate according to at least one of the preceding claims, characterized in that the weight ratio A/(A+B) is about 0.5 to 0.9, in particular about 0.7 to 0.9.

**6.** Plasticized cellulose acetate according to at least one of the preceding claims, characterized in that the weight ratio of alcohol or alcohol derivative to cyclic ester is between about 90:10 and 10:90, in particular about 70:30 to 40:60.

**7.** Plasticized cellulose acetate according to at least one of the preceding claims, characterized in that the cyclic ester is a single ester or a cyclic double ester, with these having 3 to 6 carbon atoms and 1 or 2 oxygen atoms in the ring.

**8.** Plasticized cellulose acetate according to claim 7, characterized in that the cyclic esters are given by the following formulae (I) to (VII)

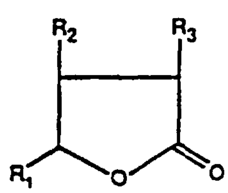
(I)

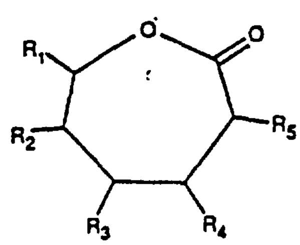
(II)

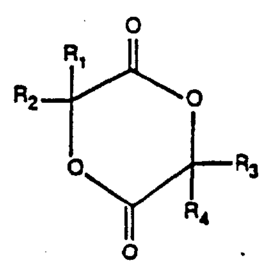
(III)

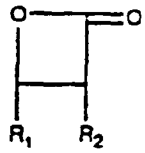

(IV)

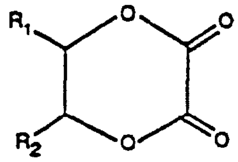

(V)

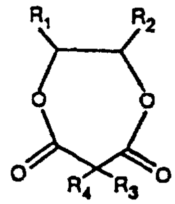

(VI)

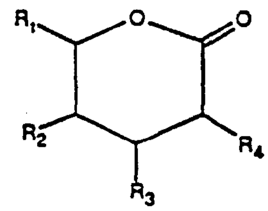

(VII)

where: $R_1$ to $R_5$ each independently of one another denote a lower alkyl group having 1 to 10 carbon atoms, in particular 1 to 4 carbon atoms, such as the methyl, ethyl, n-propyl, i-propyl and the i-butyl group and the various isomers thereof, a cycloalkyl group having 3 to 6 carbon atoms, such as, in particular, the cyclopropyl, cyclobutyl, cyclopentyl and cyclohexyl group, an aralkyl group having 7 to 18 carbon atoms, in particular the benzyl and phenethyl group, an alkylaryl group having 7 to 18 carbon atoms, in particular the tolyl group, and a heterocyclic group having 2 to 5 carbon atoms, in particular those whose heterocyclic ring contains at least one oxygen, sulphur or N atom, such as, in particular, the radicals of oxirane, tetrahydrofuran, dioxane and pyran, an aryl group in the form of a phenyl or naphthyl radical, where the aryl radicals can be substituted by a $C_1$-$C_4$-alkyl radical.

**9.** Plasticized cellulose acetate according to claim 8, characterized in that the cyclic ester is a single ester in the form of β-, δ-, ε- and higher-membered lactones.

**10.** Plasticized cellulose acetate according to claim 9, characterized in that the cyclic ester is ε-caprolactone.

**11.** Process for preparing a plasticized cellulose acetate according to at least one of claims 1 to 10, characterized in that an oligomer B in the form of the reaction product of a cyclic ester, in particular in the form of ε-caprolactone, and a mono- and/or polyfunctional alcohol and/or an alcohol derivative having at least one free hydroxyl group is reacted with a hydroxyl-group-containing cellulose acetate in the presence of a catalyst in the melt.

**12.** Process according to claim 11, characterized in that, as catalyst, use is made of dibutyltin dilaurate, dibutyltin oxide, zinc acetylacetonate, zinc acetate dihydrate, titanium(IV) butoxide and/or titanium(IV) propoxide.

**13.** Process according to claim 11 or 12, characterized in that the hydroxyl-group-containing cellulose acetate is reacted with an oligomer B which has been obtained by the reaction of ε-caprolactone and glycerol and/or sorbitol.

**14.** Process according to at least one of claims 11 to 13, characterized in that the melt is set to a temperature of about 190 to 220°C.

**15.** Process according to at least one of claims 11 to 14, characterized in that the catalyst is used at a concentration of about 0.1 to 1 % by mass.

**16.** Process according to at least one of claims 11 to 15, characterized in that the weight ratio of hydroxyl-group-containing cellulose acetate to oligomer B is set to about 70:30 to 30:70.

**17.** Process according to at least one of the preceding claims 13 to 16, characterized in that the weight ratio of glycerol and/or sorbitol to ε-caprolactone is set to about 90:10 to 10:90, in particular about 70:30 to 40:60.

**18.** Process according to at least one of claims 11 to 17, characterized in that the reaction is carried out in the melt for about 2 minutes to 6 hours.

**19.** Process for preparing a plasticized cellulose acetate according to at least one of claims 1 to 10, characterized in that a hydroxyl-group-containing cellulose acetate is reacted in situ with a cyclic ester, in particular with ε-caprolactone, and a mono- and/or polyfunctional alcohol and/or an alcohol derivative having at least one free hydroxyl group in the presence of a catalyst in the melt.

**20.** Process according to claim 19, characterized in that, as catalyst, use is made of dibutyltin dilaurate, dibutyltin oxide, zinc acetylacetonate, zinc acetate dihydrate, titanium(IV) butoxide and/or titanium(IV) propoxide.

21. Process according to claim 19 or 20, characterized in that a polyfunctional alcohol having 2 to 6 hydroxyl groups is used.

22. Process according to at least one of claims 19 to 21, characterized in that the hydroxyl-group-containing cellulose acetate is reacted with glycerol and/or sorbitol and ε-caprolactone.

23. Process according to at least one of claims 19 to 22, characterized in that the melt is set to a temperature of about 160 to 210°C.

24. Process according to at least one of claims 19 to 23, characterized in that the catalyst is used at a concentration of about 0.1 to 1 % by mass.

25. Process according to at least one of claims 22 to 24, characterized in that the weight ratio of hydroxyl-group-containing cellulose acetate to the starting mixture of glycerol and/or sorbitol and ε-caprolactone is set to about 90:10 to 30:70.

26. Process according to at least one of claims 22 to 25, characterized in that the weight ratio of glycerol and/or sorbitol to ε-caprolactone is set to about 90:10 to 10:90, in particular about 70:30 to 40:60.

27. Use of the plasticized cellulose acetate according to one of claims 1 to 10 for preparing filaments by spinning from the melt.

**Revendications**

1. Acétate de cellulose plastifié avec une teneur en un acétate de cellulose modifié A sur lequel est greffé un oligomère d'un ester cyclique, en particulier sous la forme de ε-caprolactone, caractérisé en ce que l'acétate de cellulose plastifié contient en plus un plastifiant sous la forme d'un oligomère B d'un ester cyclique, le groupe carboxyle terminal de l'oligomère B étant estérifié avec un alcool et/ou un dérivé d'alcool possédant au moins un groupe hydroxyle libre et ayant un point d'ébullition d'au moins 120 °C environ et un point de fusion non supérieur à 180 °C environ, et en ce que le rapport en poids des composants A et B est donné par la formule (1) suivante :

$$0,3 \leq A/(A + B) \leq 0,95 \quad (1)$$

2. Acétate de cellulose plastifié selon la revendication 1, caractérisé en ce que le point d'ébullition de l'alcool ou du dérivé d'alcool est au moins égal à 140 °C environ et/ou le point de fusion de l'alcool et du dérivé d'alcool n'est pas supérieur à 160 °C environ.

3. Acétate de cellulose plastifié selon la revendication 1 ou la revendication 2, caractérisé en ce que l'alcool est un alcool polyfonctionnel.

4. Acétate de cellulose plastifié selon la revendication 3, caractérisé en ce que l'alcool polyfonctionnel est le glycérol et/ou le sorbitol.

5. Acétate de cellulose plastifié selon l'une au moins des revendications précédentes, caractérisé en ce que le rapport en poids A/(A+B) est compris entre 0,5 et 0,9 environ, et notamment entre 0,7 et 0,9 environ.

6. Acétate de cellulose plastifié selon l'une au moins des revendications précédentes, caractérisé en ce que le rapport en poids de l'alcool ou du dérivé d'alcool sur l'ester cyclique est compris entre 90/10 et 10/90, et notamment entre 70/30 et 40/60.

7. Acétate de cellulose plastifié selon l'une au moins des revendications précédentes, caractérisé en ce que l'ester cyclique est un ester simple ou un ester cyclique double, lesdits esters possédant 3 à 6 atomes de carbone et 1 ou 2 atomes d'oxygène dans le cycle.

8. Acétate de cellulose plastifié selon la revendication 7, caractérisé en ce que les esters cycliques sont représentés par les formules (I) à (VII) ci-dessous :

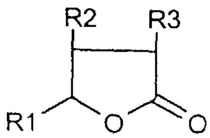

(I)

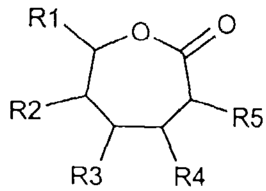

(II)

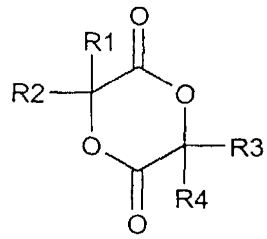

(III)

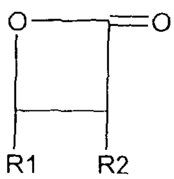

(IV)

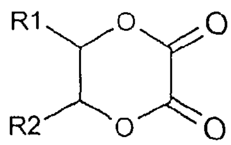

(V)

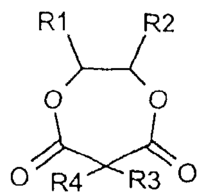

(VI)

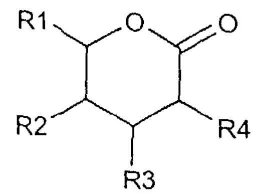

(VII)

dans lesquelles $R_1$ jusqu'à $R_5$ représentent indépendamment les uns des autres un groupe alkyle inférieur possédant de 1 à 10 atomes de carbone, et notamment de 1 à 4 atomes de carbone, par exemple les groupes méthyle, éthyle, n-propyle, i-propyle et i-butyle, ainsi que les différents isomères de ceux-ci, un groupe cycloalkyle possédant de 3 à 6 atomes de carbone tel que notamment un groupe cyclopropyle, cyclobutyle, cyclopentyle et cyclohexyle, un groupe aralkyle possédant de 7 à 18 atomes de carbone, notamment les groupes benzyle et phénéthyle, un groupe alkylaryle possédant de 7 à 18 atomes de carbone, notamment le groupe tolyle, ainsi qu'un groupe hétérocyclique possédant de 2 à 5 atomes de carbone, notamment ceux dont l'anneau hétérocyclique comporte au moins un atome d'oxygène, de soufre ou d'azote, tel que notamment les radicaux de l'oxirane, du tétrahydrofurane, du dioxane et du pyrane, un groupe aryle sous la forme d'un reste phényle ou naphtyle, les restes aryle pouvant être substitués par un reste alkyle en $C_1$-$C_4$.

**9.** Acétate de cellulose plastifié selon la revendication 8, caractérisé en ce que l'ester cyclique est un ester simple sous la forme de lactones $\beta$, $\delta$, $\varepsilon$ et de fonctionnalité supérieure.

**10.** Acétate de cellulose plastifié selon la revendication 9, caractérisé en ce que l'ester cyclique est la $\varepsilon$-caprolactone.

**11.** Procédé de fabrication d'un acétate de cellulose plastifié selon l'une au moins des revendications 1 à 10, caractérisé en ce que l'on fait réagir un oligomère B sous la forme du produit de la réaction d'un ester cyclique, notamment sous la forme de $\varepsilon$-caprolactone, et d'un alcool mono ou polyfonctionnel et/ou d'un dérivé d'alcool contenant au moins un groupe hydroxyle libre, avec un acétate de cellulose contenant des groupes hydroxyle en présence d'un catalyseur dans la matière en fusion.

**12.** Procédé selon la revendication 11, caractérisé en ce que le catalyseur utilisé est le dilaurate de dibutylétain, l'oxyde de dibutylétain, l'acétylacétonate de zinc, l'acétate de zinc dihydraté, le butylate de titane et/ou le propylate de titane.

**13.** Procédé selon la revendication 11 ou la revendication 12, caractérisé en ce que l'on fait réagir l'acétate de cellulose contenant des groupes hydroxyle avec un oligomère B provenant de la réaction de la $\varepsilon$-caprolactone et du glycérol et/ou du sorbitol.

**14.** Procédé selon l'une au moins des revendications 11 à 13, caractérisé en ce que la matière en fusion est ajustée à une température comprise entre 190 et 220 °C environ.

**15.** Procédé selon l'une au moins des revendications 11 à 14, caractérisé en ce que le catalyseur est utilisé à une concentration comprise entre 0,1 et 1 % en masse environ.

**16.** Procédé selon l'une au moins des revendications 11 à 15, caractérisé en ce que le rapport en poids de l'acétate de cellulose contenant des groupes hydroxyle sur l'oligomère B est ajusté entre 70/30 et 30/70 environ.

**17.** Procédé selon l'une au moins des revendications 13 à 16 précédentes, caractérisé en ce que le rapport en poids du glycérol et/ou du sorbitol sur la ε-caprolactone est ajusté entre 90/10 et 10/90 environ, et notamment entre 70/30 et 40/60 environ.

**18.** Procédé selon l'une au moins des revendications 11 à 17, caractérisé en ce que la réaction dans la matière en fusion se fait pendant une durée de 2 minutes à 6 heures environ.

**19.** Procédé de fabrication d'un acétate de cellulose plastifié selon l'une au moins des revendications 1 à 10, caractérisé en ce que l'on fait réagir un acétate de cellulose contenant des groupes hydroxyle in situ avec un ester cyclique, notamment avec de la ε-caprolactone, et avec un alcool mono ou polyfonctionnel et/ou un dérivé d'alcool contenant au moins un groupe hydroxyle libre en présence d'un catalyseur dans la matière en fusion.

**20.** Procédé selon la revendication 19, caractérisé en ce que le catalyseur utilisé est le dilaurate de dibutylétain, l'oxyde de dibutylétain, l'acétylacétonate de zinc, l'acétate de zinc dihydraté, le butylate de titane et/ou le propylate de titane.

**21.** Procédé selon la revendication 19 ou la revendication 20, caractérisé en ce que l'on utilise un alcool polyfonctionnel possédant de 2 à 6 groupes hydroxyle.

**22.** Procédé selon l'une au moins des revendications 19 à 21, caractérisé en ce que l'on fait réagir l'acétate de cellulose contenant des groupes hydroxyle avec du glycérol et/ou du sorbitol et de la ε-caprolactone.

**23.** Procédé selon l'une au moins des revendications 19 à 22, caractérisé en ce que la matière en fusion est ajustée à une température comprise entre 160 et 210 °C environ.

**24.** Procédé selon l'une au moins des revendications 19 à 23, caractérisé en ce que le catalyseur est utilisé à une concentration comprise entre 0,1 et 1 % en masse environ.

**25.** Procédé selon l'une au moins des revendications 22 à 24, caractérisé en ce que le rapport en poids de l'acétate de cellulose contenant des groupes hydroxyle sur le mélange de départ de glycérol et/ou de sorbitol et de ε-caprolactone est ajusté entre 90/10 et 30/70 environ.

**26.** Procédé selon l'une au moins des revendications 22 à 25, caractérisé en ce que le rapport en poids du glycérol et/ou du sorbitol sur la ε-caprolactone est ajusté entre 90/10 et 10/90 environ, et notamment entre 70/30 et 40/60 environ.

**27.** Utilisation de l'acétate de cellulose plastifié suivant l'une des revendications 1 à 10 pour produire des filaments par filage à partir de la matière en fusion.